Europäisches Patentamt

European Patent Office

Office européen des brevets

(19)

(11) **EP 1 559 319 A1**

(12) **EUROPEAN PATENT APPLICATION**
published in accordance with Art. 158(3) EPC

(43) Date of publication:
**03.08.2005 Bulletin 2005/31**

(51) Int Cl.⁷: **A01N 25/14**

(21) Application number: **03758745.8**

(22) Date of filing: **21.10.2003**

(86) International application number:
**PCT/JP2003/013427**

(87) International publication number:
**WO 2004/036994 (06.05.2004 Gazette 2004/19)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **22.10.2002 JP 2002306780**

(71) Applicant: **KUMIAI CHEMICAL INDUSTRY CO.,
LTD.
Tokyo 110-0008 (JP)**

(72) Inventors:
• **KURITA, Kazunori,
Kumiai Chemical Industry Co.,Ltd
Taito-ku, Tokyo 110-0008 (JP)**

• **MISUMI, Yuji, Kumiai Chemical Industry Co., Ltd
Taito-ku, Tokyo 110-0008 (JP)**
• **OZAKI, Eisuke,
Kumiai Chemical Industry Co., Ltd.
Taito-ku, Tokyo 110-0008 (JP)**
• **IKEUCHI, Toshihiro,
Kumiai Chemical Industry Co.Lt
Taito-ku, Tokyo 110-0008 (JP)**

(74) Representative: **Le Coupanec, Pascale et al
Nony & Associés
3, rue de Penthièvre
F-78008 Paris (FR)**

(54) **AGRICULTURAL OR HORTICULTURAL PARTICULATE COMPOSITION COMPRISING WETTABLE GRANULAR AGENT**

(57)    As a novel, agricultural or horticultural granular composition having a low foamability and comprising a granular wettable powder, that is, water-dispersible granules which can have an improved disintegrability in water, an improved dispersibility in water and an improved suspensibility in water, irrespective of the nature and the property of the agrochemically active ingredient as incorporated, there is provided an agricultural or horticultural granular composition comprising as the essential components, (a) at least one of an agrochemically active ingredient, (b) at least one of a surfactant selected from a sulfonate-type surfactant, a sulfate-type surfactant and a phosphate-type surfactant, and (c) at least one of a metal salt of a fatty acid of 6 to 28 carbon atoms. An aqueous dispersion which may be prepared by diluting the composition of the present invention with water has a low foamability. When the present composition is mixed with water, the granules of the present composition can rapidly disintegrate in water and can separate into finely-divided disperse particles which are kept suspended well in water.

EP 1 559 319 A1

**Description**

Technical Field

This invention relates to a novel granular composition which is for use in agriculture or horticulture and comprises water-dispersible granules having an excellent disintegrability in water, an excellent dispersibility in water and an excellent suspensibility in water but which has a low foamability. The water-dispersible granule (abbreviated as WDG) is also referred to as a granular-wettable powder.

Background Art

In many cases, an agrochemical compound is applied for its use after it has been formulated into various formulations such as a dust, granules, a wettable powder, an emulsifiable concentrate, SC (a suspension concentrate), EW (an emulsion in a form of an oil-in-water). Among these formulations, the dust and the granules are applied as such or by means of an applicator. Whereas, the emulsifiable concentrate, the wettable powder, the SC or the EW is, at first, diluted often with water or other liquid to prepare a liquid formulation containing a predetermined concentration of the active ingredient, and then the liquid formulation is applied by spraying it.

Most of the emulsifiable concentrates are prepared by dissolving an agrochemically active ingredient into an organic solvent and then adding an emulsifying agent etc., to the resulting solution. Accordingly, as long as the agrochemically active ingredient to be used is soluble in an organic solvent, the preparation of the emulsifiable concentrate may be feasible to be done. For the emulsifiable concentrate, the organic solvent employed is often flammable and involves a danger such as fire, and thus sufficient care is required for its handling, transportation or storage. Further, the emulsifiable concentrate has problems of toxicity and phytotoxicity due to the use of the organic solvent.

On the other hand, the wettable powder is prepared either by pulverizing a solid, agrochemically active ingredient into fine particles or by making a liquid, agrochemically active ingredient to be adsorbed in a highly oil-absorptive fine powder and then pulverizing the powder into more fine particles, and then adding a surfactant having a dispersibility and a wettability to the resulting fine particles or the resulting fine powder. Accordingly, the wettable powder can be prepared even if the agrochemically active ingredient insoluble in an organic solvent is employed, and also the wettable powder does not involve the said danger such as the fire in its handling, transportation or storage, because any organic solvent is not used therein. Furthermore, the wettable powder does not have the problems of toxicity and phytotoxicity causable due to the use of the organic solvent.

However, it is well known that a conventional usual wettable powder has drawbacks as mentioned below. Namely, the agrochemically active ingredient itself which is contained in the wettable powder is in the form of fine particles, and the whole of the wettable powder is composed of fine particles. Accordingly, a conventional wettable powder has drawbacks that it has a small apparent specific gravity and thus is voluminous, and that when the wettable powder is diluted with water to prepare a sprayable solution, fine dusts tend to fly up, and thus cause "dusting". Therefore, the wettable powder has a problem undesirable for health of workers. In addition, there is a problem that it is difficult to carry out the operation of dividing a certain volume of the wettable powder into separate packed products of smaller volumes, as well as the operation of measuring the volume of the wettable powder so divided and packed in the separate packed products of smaller volumes.

A flowable formulation (FL) such as SC ie., the SC formulation and EW ie., the EW formulation is usually prepared as a liquid formulation in the form of a suspension or an emulsion. Therefore, the flowable formulation is a formulation where the drawbacks of the difficult measurement of the powder volume and the powder dusting inevitable with the wettable powder have been solved. However, the flowable formulation is a liquid formulation having a relatively high viscosity, and thus the operation of discharging or removing it from its container is difficult, and adhesion of some amount of the flowable formulation on the inner wall of its container usually can take place but cannot be avoided after the removal of it from the container. Therefore, the flowable formulation has a problem that it is troublesome to dispose the container which was once used but remaining contaminated by the residual amount of the flowable formulation as removed therefrom.

In recent years, therefore, it has been attempted to granulate a wettable powder, so as to prepare the water-dispersible granules.

The water-dispersible granules, namely a granular wettable powder is prepared by mixing an agrochemically active ingredient, a surfactant and a binder, and if necessary, any further aduvant with each other in the form of their fine powders, and then granulating the resulting fine powdery mixture into granules. As a granulation method of producing the granules, there may be used an extruding granulation method, a spray-drying granulation method, a fluidized bed granulation method, a tumbling granulation method, a compression granulation method, and so on. The water-dispersible granules have been granulated as the solid granules and thus do not have the drawbacks of the bulkiness, the powder dusting and the difficulty in measurement of the volume thereof which are associated with the conventional wettable powder, and further the water-dispersible granules are free from said problem due to the high viscosity of the flowable formulation.

The water-dispersible granules are usually applied for use after the granules are diluted with a few tens to a few thousands-times greater volume of water so as to form an aqueous dispersion containing the fine particles, and the resulting aqueous dispersion is applied to an agricultural field. When said aqueous dispersion is prepared, it is necessary that when the water-dispersible granules have been placed in water, each granule thereof can quickly disintegrates in water, while the agrochemically active ingredient and the adjuvant components can be dispersed uniformly into water to produce and maintain a state of a stabilized suspension. However, for example, in a case where a composition composed of the conventional usual wettable powder is simply granulated into a form of granules, each granule so obtained is poor in its disintegrability in water and its dispersibility in water, so that a uniform and stable aqueous dispersion can hardly be obtained from such granules. Further, there can occur a problem such that the said aqueous dispersion so obtained cannot maintain a stably suspended state for a long period of time, and so on.

As a method for solving these above-mentioned problems, it has been proposed for the production of the water-dispersible granules that a particular surfactant or a combination of a plurality of surfactants is incorporated in the granules (refer to Japanese Patent Application First Publication Kokai Sho 59-193803, Japanese Patent Application First Publication Kokai Sho 62-36302, Japanese Patent Application First Publication Kokai Hei 5-43402, Japanese Patent Application First Publication Kokai Hei 7-126106 and Japanese Patent Application First Publication Kokai Hei 8-34702). Further, there have been proposed some methods such that starch and a water-soluble inorganic salt are incorporated in the granules (refer to Japanese Patent Application First Publication Kokai Sho 51-1649), that saccharides, a naphthalenesulfonate-type surfactant and an alkaline metal phosphate are incorporated in the granules (refer to Japanese Patent Application First Publication Kokai Sho 57-163303), that one or more of a polymer of an unsaturated carboxylic acid, a condensate of formaldehyde with a styrene sulfonate and an alkaline metal phosphate are incorporated in the granules (refer to Japanese Patent Application First Publication Kokai Sho 61-236701), that an anionic surfactant and bentonite are incorporated in the granules (refer to Japanese Patent Application First Publication Kokai Sho 62-263101), and that a surfactant and kaolin-type clay in a form of small particles having a particle diameter of 2 to 10 μm are incorporated in the granules (refer to Japanese Patent Application First Publication Kokai Hei 3-264502 or its corresponding U.S. Patent No. 5,180,240). However, such conventional products of the water-dispersible granules or granular wettable powders have a drawback that they do not necessarily exhibit a good disintegrability in water and a good dispersibility in water, because their disintegrability in water and their dispersibility in water can vary especially with receiving the influences of the type and the property of the agrochemically active ingredient as incorporated.

For a certain case, depending on the type of the agrochemically active ingredient as incorporated in the water-dispersible granules, a surfactant having a high wettability may possibly be incorporated into the granules in order to improve particularly their disintegrability in water and their dispersibility in water. However, in this case, there can occur a problem that when such water-dispersible granules so produced are mixed with water to prepare an aqueous dilute dispersion, and when the aqueous dilute dispersion so prepared is stirred upon its application, such aqueous dilute dispersion can form a great volume of foams due to a high foamability of said dilute dispersion. Therefore, there is a further problem that the handling of such aqueous dilute dispersion as prepared is troublesome.

Further, in order to reduce the foaming so involved upon the preparation of the aqueous dilute dispersion from a wettable powder, it was generally proposed that a silicone-type antifoaming agent such as silicone oil and a silicone emulsion is incorporated in the known wettable powder. Whereas, when the water-dispersible granules are added with the silicone-type antifoaming agent, it is usual that such water-dispersible granules have a reduced disintegrability in water and a reduced dispersibility in water. Therefore, the incorporation of a silicone-type antifoaming agent in the water-dispersible granules has not been put into a practical use. Accordingly, it has hitherto been demanded that the water-dispersible granules are imparted with a low foamability, and also with an excellent disintegrability in water and an excellent dispersibility in water of the granules.

It is an object of the present invention to provide a novel, granular composition which comprises water-dispersible granules having an improved disintegrability in water, an improved dispersibility in water and an improved suspensibility in water (ie., a suspension stability) without being affected by the type or the property of the agrochemically active ingredient, and which is capable of providing an aqueous dispersion having a low foamability when said granules are mixed with water to prepare said aqueous dispersion.

Disclosure of the Invention

In order to achieve the objects as mentioned above, the present inventors have conducted extensive studies to solve the problems of the conventional known water-dispersible granules. As a result, we, the present inventors have now found that when (a) at least one of a solid or liquid, agrochemically active ingredient and (b) at least one of a surfactant selected from a sulfonate-type surfactant, a sulfate-type surfactant and a phosphate-type surfactant, as well as (c) at least one of a metal salt of a fatty acid of 6 to 28 carbon atoms as an antifoaming agent, are mixed together as the essential components, and when the resulting mixture is granulated into granules, the resulting water-dispersible granules are capable of preparing an aqueous dispersion of a low foamability by being diluted with water, since the actions of the fatty acid metal salt (c) as incorporated take place favorably without being affected by the type or the property of the agrochemically active ingredient. Also, we have now found that the resulting granules prepared as above have a good disintegrability in water and a good dispersibility in water, as well as that the aqueous dispersion as obtained by mixing said granules with water has a low foamability even when it is vigorously stirred. The present inventors have accomplished this invention based on these findings mentioned above.

Therefore, the present invention provides an agricultural or horticultural granular composition comprising water-dispersible granules having a low foamability, characterized in that the composition comprises:

(a) at least one of a solid or liquid, agrochemically active ingredient as an active ingredient,
(b) at least one of a surfactant selected from a sulfonate-type surfactant, a sulfate-type surfactant and a phosphate-type surfactant, and
(c) at least one of a metal salt of a fatty acid of 6 to 28 carbon atoms, as an antifoaming agent.

The present invention will be described below in detail.

The agrochemically active ingredient which may be used in the granular composition of the present invention includes generally any compound which is useful as the agrochemical compound, including an insecticide, a fungicide, a herbicide or a plant growth regulator, that is to say, any agrochemical compound. However, a solid, agrochemically active ingredient is suitable especially. A liquid, agrochemically active ingredient can be used in a form that it has been impregnated in a solid carrier having an oil-absorption property, such as porous diatomaceous earth or non-porous amorphous silica.

A compound, which may be used as the agrochemically active ingredient that may be a pesticidally active substance, may be incorporated singly or as a mixture of two or more thereof into the granules. Illustratively, some agrochemical compounds as listed below may be mentioned, but not be limited to them. Further, these agrochemical compounds may include their geometric isomers and optical isomers. As a name of the agrochemically active ingredient, namely the agrochemical compound, there is used a generic name which is a generic name described in the "NOUYAKU YOURAN 2001" edited and issued by Japan Plant Protection Association, or ISO name approved by ISO (abbreviation of International Standard Organization). When the generic name and the ISO name are not available, a chemical name is used.

(A) An example of the fungicide includes EDDP, IBP, TPN, acibenzolar-S-methyl, azoxystrobin, isoprothiolane, ipconazole, iprodione, iminoctadine albesilate, iminoctadine triacetate, imibenconazole, oxadixyl, oxytetracyclin, oxolinic acid, kasugamycin, carpropamide, carbendazol, quinomethionate, captan, kresoxim-methyl, chloroneb, cyazofamid, diethofencarb, diclomezine, dithianon, zineb, difenoconazole, diflumetorim, cyproconazole, cyprodinil, simeconazole, dimethirimol, dimethomorph, ziram, streptomycin sulfonate, diclofluanid, dazomet, thiadiazin, thiabendazole, thiram, thiophanate-methyl, thifluzamide, tecloftalam, tetraconazole, tebuconazole, copper terephthalate, triadimefon, triazine, tricyclazole, triflumizole, triforine, tolclofos-methyl, trifloxystrobin, nonylphenol copper sulfonate, validamycin A, bitertanol, hydroxyisoxazole, pyrazophos, pyrifenox, pyroquilon, pyraclostrobin, vinclozolin, fenamidone, fenarimol, fenhexamide, folpet, phthalide, blasticidin-S, furametpyr, fluazinam, fluoroimide, fludioxonil, flusulfamide, flutolanil, prochloraz, procymidone, propamocarb hydrochloride, propiconazole, propineb, probenazole, hexaconazole, benomyl, pefurazoate, pencycuron, benthiazole, benthiavalicarb-isopropyl, fosetyl, polyoxin, polyoxin comlex, polycarbamate, formaldehyde, manzeb, maneb, myclobutanil, methasulfocarb, metalaxyl, iron methanearsonate, iron methanearsonate ammmonium, metominostrobin, mepanipyrim, mepronil, conidium of Trichoderma, copper (copper oxychloride, basic copper sulfate, cupric hydroxide, copper sulfate anhydride), 8-hydroxyquinoline-copper, sulfur, zinc sulfate and the like.

(B) An example of the insecticide includes BPMC, BPPS, BRP, a crystal toxin produced by Bacillus thuringiensis, a crystal toxin produced by living spores of Bacillus thuringiensis, CVMP, CVP, CYAP, DDVP, DEP, DMTP, ECP, EPN, ESP, MEP, MIPC, MPP, MTMC, NAC, PAP, PHC, PMP, XMC, acrinathrin, acequinocyl, acetamiprid, acephate, amitraz, alanycarb, allethrin, isoxathion, imidacloprid, indoxacarb, ethiofencarb, ethion, ethylthiometon, etoxazole, etofenprox, ethoprophos, emamectin, emamectin benzoate, oxamyl, okimelanolure, carbam, cartap hydrochloride, carbosulfan, quinomethionate, clothianidin, clofentezine, chloropicrin, chlorpyrifos, chlorpyrifos-methyl, chlorfenapyr, chlorfluazuron, kelthane, cycloprothrin, dinotefuran, cyhalothrin, cyfluthrin, cypermethrin, dimethylvinphos, dimethoate, diafenthiuron, silafluofen, spinosad, spirodiclofen, sulprofos, diazinon, thiacloprid, thiamethoxam, thiodicarb, thiocyclam, thiometon, tetradifon, tebufenozide, tebufenpyrad, tefluthrin, teflubenzuron, derris, tralomethrin, nitenpyram, vamidothion, halfenprox, bifenthrin, pymetrozine, pyraclofos, pyridaphenthion, pyridaben, pyridalyl, pirimicarb, pyrimidifen, pirimiphos-methyl, fipronil, phenisobromolate, fenoxycarb, fenothiocarb, fenvalerate, fenpyroximate, pyrethrin, fenpropathrin, buprofezin, furathiocarb, flucythrinate, fluvalinate, flufenoxuron, flufenerim, prochloraz, prothiofos, propaphos, profenofos, hexythiazox, permethrin, bensultap, benzoepin, benzomate, benfuracarb, phosalone, fosthiazate, polynactin complex, malathon, milbemectin, methomyl, methoxyfenozide, monocrotophos, lufenuron, resmethrin, levamisol hydrochloride, fenbutatin oxide, morantel tartrate, methyl bromide, nicotine sulfate and the like.

(C) An example of the herbicide includes 2,4-PA, ACN, CAT, CNP, DCNU, DCPA, DPA, MBPMC, MCC, MCP, MCPB, MCPP, MDBA, PAC, SAP, TCTP, ioxynil, asulam, atrazine, amiprofos-methyl, ametryn, alachlor, alloxydim, isouron, isoxaben, imazaquin-ammonium, imazapyr, imazosulfuron, imazamox-ammonium, indanofan, esprocarb, ethidimuron, ethoxysulfuron, etobenzanid, endothal-disodium, oxadiazon, orbencarb, karbutilate, quizalofop-ethyl, quinchlorac, glyphosate-ammonium, glyphosate-isopropylamine, glyphosate-trimesium, clethodim, glufosinate, chlomethoxynil, chlorphthalim, cyanazine, diquat, dithiopyr, siduron, cinosulfuron, cyhalofop-butyl, diphenamid, dimethametryn, simetryn, dimepiperate, cinmethylin, sethoxydim, terbacil, daimuron, dazomet, thiazafluron, desmedipham, tetrapion, thenylchlor, tebuthiuron, triclopyr, trifluralin, naproanilide, napropamide, nicosulfuron, paraquat, halosulfuron-methyl, bialaphos, picloram, bifenox, piperophos, pyrazoxyfen, pyrazosulfuron-ethyl, pyrazolate, pyridate, pyributicarb, fenoxaprop-ethyl, phenothiol, phenmedipham, pyraflufen-ethyl, butachlor, butamifos, flazasulfuron, fluazifop, pretilachlor, prodiamine, propyzamide, bromacil, prometryn, bromobutide, hexazinone, beslogine, bensulfuron-methyl, benzofenap, bentazone, bentazone-sodium, benthiocarb, pendimethalin, benfuresate, methyldaimuron, metsulfuron-methyl, metolachlor, metribuzin, mefenacet, molinate, linuron, lenacil, sodium chlorate, cafenstrole, pyriminobac-methyl, azimsulfuron, diflufenican, bispyribac-sodium, cyclosulfamuron, triaziflam, pentoxazone and the like.

(D) An example of the plant growth regulator includes 1-napthtylacetamide, 4-CPA, MCPB, ancymidol, inabenfide, indole butyric acid, uniconazole P, ethychlozate, ethephon, oxyethylenedocosanol, oxine-sulfate, cloxyfonac, chlormequat, chlorella extracts, choline chloride, dichlorprop, dikegulac, gibberellin, decyl alcohol, paclobutrazole, piperonyl butoxide, flurprimidol, prohexadione-calcium, benzyl-aminopurine, pendimethalin, forchlorfenuron, maleic hydrazicholine, maleic hydrazide, mepiquat-chloride, mefluidide, calcium peroxide and the like.

The proportion or the content (concentration) of the agrochemically active ingredient present in the granular composition of the present invention is not limittative. However, in view of the granulability property and a biological activity of the active ingredient, the proportion of the active ingredient may be in a range of 0.1 to 85%, particularly 0.1 to 75%, more particularly 1 to 50% based on the weight of the granules, in usual.

As the surfactant to be used in the granular composition of the present invention, one or more of the surfactants selected from a sulfonate-type surfactant, a sulfate-type surfactant and a phosphate-type surfactant may be used. In particular, the sulfonate-type surfactant is preferably used. These surfactants can be used singly or as a mixture of two or more of them and are usually contained in a proportion of 0.5 to 30% by weight, preferably 1 to 20% by weight in the granules which constitute the composition of the present invention.

(i) An example of the sulfonate-type surfactant to be usable in the composition of the present invention includes an alkyl sulfonate (for example, an alkaline metal salt, ammonium salt or an alkanolamine salt of a paraffin sulfonic acid), a dialkyl sulfosuccinate (for example, an alkaline metal salt or an alkaline earth metal salt of a dialkyl sulfosuccinic acid), an alkylbenzenesulfonate (for example, an alkaline metal salt, an alkaline earth metal salt, ammonium salt, an alkylamine salt, an alkanolamine salt or a cycloalkylamine salt of dodecyl benzenesulfonic acid), an alkylnaphthalenesulfonate (for example, a naphthalenesulfonic acid-formalin condensate and an alkaline metal salt, an alkaline earth metal salt or an ammonium salt thereof, a methylnaphthalenesulfonic acid-formalin condensate and an alkaline metal salt, an alkaline earth metal salt or an ammonium salt thereof, as well as a butylnaphthalenesulfonic acid-formalin condensate and an alkaline metal salt, an alkaline earth metal salt or ammonium salt thereof), a lignin sulfonate (for example, an alkaline metal salt or ammonium salt of a lignin sulfonic acid, and an alkaline metal salt or ammonium salt of partial desulfonated lignin sulfonic acid of high purity), a polyoxyethylene alkylphenyl ether sulfonate (for example, an alkaline metal salt of polyoxyethylene nonylphenyl ether sulfonic acid and polyoxyethylene octylphenylether sulfonic acid).

(ii) An example of the sulfate-type surfactant to be usable in the composition of the present invention includes an alkylsulfate (for example, sodium salt, ammonium salt or an alkanolamine salt of lauryl sulfate, and sodium salt, ammonium salt or an alkanolamine salt of oleyl sulfate), a polyoxyethylene alkyl ether sulfate (for example, sodium salt, ammonium salt or an alkanolamine salt of polyoxyethylene lauryl ether sulfate), a polyoxyethylene aryl ether sulfate (for example, sodium salt, ammonium salt or an alkanolamine salt of polyoxyethylene nonylphenyl ether sulfate and sodium salt, ammonium salt or an alkanolamine salt of polyoxyethylene styryl phenyl ether sulfate).

(iii) An example of the phosphate-type surfactant to be usable in the composition of the present invention includes an alkyl phosphate (for example, sodium salt, ammonium salt or an alkanolamine salt of lauryl phosphate), a polyoxyethylene alkyl ether phosphate (for example, sodium salt, ammonium salt or an alkanolamine salt of polyoxyethylene lauryl phosphate), a polyoxyethylene aryl ether phosphate (for example, sodium salt, ammonium salt or an alkanolamine salt of polyoxyethylene nonyl phenyl ether phosphate and sodium salt, ammonium salt or an alkanolamine salt of polyoxyethylene styryl phenyl ether phosphate).

(iv) Furthermore, one or more surfactants other than those described as above, which may be, for example, a nonionic surfactant such as a polyoxyethylene alkyl ether, a polyoxyalkylene alkyl ether, polyoxyethylene styrylphenyl ether, a polyoxyalkylene styrylphenyl ether, a polyoxyethylene alkylaryl ether, a polyoxyethylene alkyl ester, a polyoxyethylene sorbitan alkyl ester, a sorbitan alkyl ester, polyoxyethylene polyoxypropylene block copolymer, polyoxyethylene castol oil and acetylene glycol, or an anionic surfactant such as a polycarboxylate, a resinate and the like, can be additionally incorporated in the composition of the present invention.

The metal salt of a fatty acid having 6 to 28 carbon atoms to be used as the antifoaming agent in the composition of the present invention may comprise water-soluble alkaline metal salts of mixed ($C_6$-$C_{28}$)fatty acids, which means so-called a soap, or the said metal salt as the antifoaming agent may comprise a mixture of the metal salts of mixed ($C_6$-$C_{28}$)fatty acids, which mixture has a solubility in water at a value of 100 ppm or less at 20°C, and which mixture namely means so-called a metal soap.

Particularly, an example of the metal salt(s) of fatty acid(s) having 6 to 28 carbon atoms includes sodium salts or potassium salts of the mixed ($C_6$-$C_{28}$)fatty acids, or may comprise sodium laurate, sodium myristate, sodium palmitate, sodium stearate, sodium oleate, sodium elaidate, sodium brassidate, potassium caprate, potassium laurate, potassium myristate, potassium palmitate, potassium stearate or potassium oleate.

Particularly, an example of the metal salt(s) of fatty acid(s) having 6 to 28 carbon atoms, which has a solubility in water of 100 ppm or less at 20°C, includes calcium salt or magnesium salt of the mixed ($C_6$-$C_{28}$)fatty acids, or may comprise lithium myristate, magnesium myristate, lithium palmitate, calcium palmitate, magnesium palmitate, lithium stearate, calcium stearate, magnesium stearate, barium stearate, zinc stearate, aluminum stearate, barium oleate, calcium oleate, zinc oleate, zinc hydroxystearate, zinc laurate, zinc behenate, zinc montanate, zinc ricinoleate, magnesium behenate, magnesium montanate, magnesium hydroxystearate, magnesium sebacinate, calcium laurate, calcium ricinoleate, calcium behenate, calcium sebacinate and the like.

One or more of these metal salt(s) of fatty acid(s) of 6 to 28 carbon atoms (as the antifoaming agent) is or are usually contained in a proportion of 0.05 to 10% by weight, preferably 0.2 to 5% by weight in the granules which constitute the composition of the present invention.

If it is required for the formation and production of the granules, a solid carrier, particularly diatomaceous earth or amorphous silica may be further incorporated in the granules of the composition of the present invention, and this is preferable. The term "diatomaceous earth" used for the solid carrier in the present invention means a fossil of an unicellular plant, which fossil is mainly composed of silicon dioxide, and said unicellular plant is a kind of algae present and propagating in plain water or seawater. The diatomaceous earth has on its surface many fine pores which are having geometric patterns and communicating between the inside and the outside of the cell. Highly porous diatomaceous earth having particle size of about 0.1 to 1 μm is preferably used. In the present invention, this diatomaceous earth may be used as the carrier as it is.

Further, a processed diatomaceous earth product, which is obtained by treating diatomaceous earth with a known process conventionally used in the field of agrochemical formulation, may be used as a solid carrier. For example, there may be used a processed diatomaceous earth product having a specific surface area in the order of about 1 to 40 m²/g, including a dried diatomaceous earth product which may be obtained by pulverizing a raw diatomaceous earth, drying the pulver and classifying repeatedly the resulting particles of the earth to remove impurities and harvesting a product of a uniform particle size; and a diatomaceous earth product which may be obtained by calcining the diatomaceous earth in the range of about 800 to 1300°C, as well as a processed earth product which may be obtained by adding a flux such as sodium carbonate to raw diatomaceous earth and then making calcination of the resulting admixture (refer to "FUNTAI BUSSEI ZUSETU", published by The Association of Power Process Industry and Engineering, Japan). Illustratively, as commercially available products of dried diatomaceous earth, RADIOLITE SPF (a trade name, manufactured by Showa Chemical Industry Co., Ltd. Japan) and the like are used. Or, as the calcined product of diatomaceous earth, RADIOLITE #100, RADIOLITE #200, RADIOLITE #500, RADIOLITE #800, RADIOLITE FINEFLOW B (the trade names, manufactured by Showa Chemical Industry Co., Ltd. Japan) and others may be used. As the processed diatomaceous earth product which has been calcined along with a fux, RADIOLITE MICROFINE, RADIOLITE F, RADIOLITE CLEARFLOW, RADIOLITE #2000 (the trade names, manufactured by Showa Chemical Industry Co., Ltd.) may be used. Among them, the processed diatomaceous earth product having a specific surface area in the order of about 1 to 10 m²/g (for example, the calcined products, the flux-added and calcined products and other similar products as described above) is preferable. However, diatomaceous earth usable in the present invention are not limited to the above examples.

When diatomaceous earth is incorporated as a carrier in the composition of the present invention, the proportion or content of the diatomaceous earth added in the water-dispersible granule may usually be in an amount of about 10 to 90% (by weight) on the basis of the whole weight of the granules. The proportion of the solid carrier may vary depending on the concentration of the active ingredient and the surfactants present in the granules. For the purpose of improvement of the granulability property, the disintegrability in water and other factors, diatomaceous earth may preferably be incorporated in the granules in a proportion of about 50 to 90% by weight. The diatomaceous earth or the processed diatomaceous earth product as incorporated can act as a granulation aid upon the granulation.

The composition of the present invention may contain a filler other than the diatomaceous earth, which may be a mineral carrier, a water-soluble solid carrier and a vegetable carrier. An example of such mineral carrier includes, for example, quarz silica, talc, a clay, calcium carbonate, acidic clay, attapulgite, zeolite, cerisite, sepiolite, calcium silicate and the like. An example of such water-soluble solid carrier includes, for example, ammonium sulfate, urea, dextrin, lactose, fructose, sucrose, glucose, sodium chloride, sodium sulfate, sodium carbonate, potassium chloride, sodium bicarbonate, maleic acid, citric acid, fumaric acid, malic acid, a polyethylenglycol of an average molecular weight of 6000 to 20000 and the like. An example of the vegetable carrier includes, for example, wheat flour, wood flour, starch, bran, soybean flour, ground product of fiberous crop plant and the like. An example of another solid carrier includes, for example, an amorphous silica. The solid carrier other than the diatomaceous earth may usually be contained in the composition of the present invention at its content of 5 to 95%, preferably 5 to 75% on the basis of the weight of the granules.

A binder, which is incorporatable in the composition of the present invention if desired, can be a binder such as carboxymethylcellulose, polyvinyl alcohol, polyvinyl pyrrolidone, dextrin, starch and preprocessed alpha-starch. Further, an improver for modifying physical property, such as sodium tripolyphosphate, algininate and polyacrylate, and other adjuvant, such as a water-soluble polymer, a solvent, an absorptive fine powder, a binder, a grinding aid, a stabilizer, a colorant, an activity-enhancer, a flavour, a builder may also be incorporated in the composition of the present invention, if necessary.

The granule composition of the present invention may be prepared, for example, by a formulation process as described hereinafter, but this is not limitative. Thus, such formulation process may be carried out by firstly mixing an agrochemically active ingredient with the surfactant and the antifoaming agent, but if desired, along with a solid carrier and a binder and if desired, also along with an improver for physical property, a stabilizer for the components and other additive(s). The resulting mixture may then be pulverized by means of an impacting grinder, if necessary. If desired, another granulation carrier may be added thereto. The admixture so obtained is added with water, and thereafter the whole mixture is kneaded. Then, the kneaded mixture so formed is granulated by a granulating said kneaded mixture by means of an extrusion granulator which is equipped with a dies having open holes with a hole diameter of usually 0.1 to 5 mm, preferably of 0.2 to 2 mm. The extruded product of a cylindrical shape is cut into cylindrical granules. The resulting granulated product is dried and then the dried granulated product is classified by means of a suitable screen device which is adapted to collect the granules having desired particle sizes, whereby there is obtained the granule composition of this invention comprising the desired granules.

Otherwise, the granule composition of this invention may also be produced by a process which comprises adding the agrochemically active ingredient, the surfactant and the antifoaming agent to an adequate amount of water, optionally adding an adequate amount of a carrier thereto if necessary, and adding an needed amount of other components if required, subjecting the resulting mixture to a wet-type pulverizer device such as ball-mill, Dynomill, a sand-grinder, to prepare an aqueous suspension, and adding, if necessary, to said aqueous suspension another components such as a further surfactant and a carrier in their adequate amounts, and subsequently the resultant aqueous admixture through an extrusion-granulator to produce a granulatable kneaded mixture, and then granulating this mixture into the desired granules.

The water-dispersible granules of forming the composition of the present invention thus obtained, have advantages such that (1) they have an excellent disintegrability in water and an excellent dispersibility in water, independently from the type or nature and the property of the agrochemically active ingredient; (2) they exhibit a low foamability upon dilution with water, independently from the type and the property of the agrochemically active ingredient, and the resulting aqueous dispersion as prepared from the granules has an excellent suspensibility in water, namely an excellent suspension stability in water; (3) caking of the granules during their long-term storage is prevented; (4) the aqueous dispersion as obtained by dilution of the granules with water is hard to foam upon its stirring.

Further, the present invention can be utilized widely in a variety of agriculture or horticulture granular compositions comprising as an active ingredient a fungicide, an insecticide, a herbicide, a plant growth regulator and the like.

Best Mode for Carrying out the Invention

Next, the present invention is further illustrated in detail with reference to the following Examples, Comparative Examples and Test Examples, but is not limited thereto. Furthermore, the term "part(s)" given in the following Examples all means "part(s) by weight".

Example 1

50 parts of mepanipyrim (a fungicide), 2 parts of sodium lauryl sulfate as a surfactant, 8 parts of a condensate of formaldehyde with sodium alkylnaphthalenesulfonate (a surfactant), 1 part of sodium salts of mixed fatty acids (which mean namely a soap having a trade name "GEMBU FLAKE S" as manufactured by Dai-ichi Kogyo Seiyaku Co., Ltd., Japan and comprise a mixture of sodium salts of mixed fatty acids of 6 to 28 carbon atoms) acting as the antifoaming agent, 10 parts of a diatomaceous earth, 5 parts of white carbon (namely, an amorphous silica having a trade name "CARPLEX #1120" as manufactured by Shionogi & Co., Ltd., Japan) and 24 parts of a clay were uniformly mixed together. The resultant uniform mixture was pulverized by means of a pulverizer device available under a trade name of Jet-O-Mizer.

To the resulting fine powder were added about 10 parts of water, and the resultant slurry mixture was kneaded. The kneaded product so obtained was granulated by means of an extrusion-granulator which was equipped with a screen-type dies having opening holes of 0.6 mm in diameter, so that cylindrical granules were produced. After drying the resultant granules at 60°C, the dried granules were screened under shaking by means of a screen assembly composed of sieves in which a sieve of 16 mesh was placed over the top of a underlying sieve of 48 mesh. Granules which were remaining on the top of the 48 mesh sieve were collected and harvested. In this way, the granules having desired particle sizes within the range of particle diameters of 0.3 to 1.0 mm were obtained as a product of the granular composition comprising the water-dispersible granules according to the present invention.

Example 2

15 parts of benthiavalicarb-isopropyl (a fungicide), 2 parts of sodium lauryl sulfate, 7 parts of sodium lignin sulfonate, 1 part of sodium dialkylsulfosuccinate, 1 part of sodium salts of mixed fatty acids (which mean a soap having a trade name "ANPHOL MT-A" as manufactured by Dai-ichi Kogyo Seiyaku Co., Ltd., Japan, and comprise a mixture of sodium salts of mixed fatty acids of 6 to 28 carbon atoms) acting as the antifoaming agent, 30 parts of a diatomaceous earth and 44 parts of a clay were uniformly mixed together. The resulting mixture was pulverized by means of a pulverizer device, Jet-O-Mizer.

To the resulting fine powder were added about 10 parts of water, and the resultant slurry mixture was kneaded. The kneaded product so obtained was granulated by means of an extrusion-granulator equipped with the screen-type dies having opening holes of 0.6 mm in diameter. After drying the so obtained granules at 60°C, the dried granules were screened by means of the screen assembly composed of a sieve of 16 mesh and a sieve of 48 mesh, in the same manner as in Example 1. Granules which were remaining on the top of the 48 mesh sieve were collected. In this way, the granules having desired particle sizes within the range of particle diameters of 0.3 to 1.0 mm were harvested as a product of the granule composition comprising the water-dispersible granules according to the present invention.

Example 3

10 parts of pyriminobac-methyl (a herbicide), 3 parts of sodium alkylbenzenesulfonate, 7 parts of a condensate of formaldehyde with sodium alkylnaphthalenesulfonate, 5 parts of polyoxyethylene alkylphenyl ether, 1 part of sodium stearate as the antifoaming agent, 10 parts of a diatomaceous earth, 5 parts of white carbon (an amorphous silica having a trade name "CARPLEX #1120" as manufactured by Shionogi & Co., Ltd., Japan) and 59 parts of a clay were uniformly mixed together. The resulting mixture was pulverized by means of Jet-O-Mizer.

To the resulting fine powder were added about 10 parts of water, and the resulting mixture was kneaded. The kneaded product so obtained was granulated by means of the extrusion-granulator equipped with a screen-type dies having opening holes of 0.6 mm in diameter. After drying the so produced granules at 60°C, the dried granules were screened by means of the screen assembly composed of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a product of the granule composition comprising the water-dispersible granules according to the present invention.

Example 4

30 parts of mepanipyrim (a fungicide), 2 parts of sodium alkylbenzenesulfonate, 5 parts of calcium lignin sulfonate, 2 parts of sodium dialkylsulfosuccinate, 1 part of the mixed fatty acid sodium salts (a soap having a trade name "ANPHOL MT-A" as manufactured by Dai-ichi Kogyo Seiyaku Co., Ltd., Japan) as the antifoaming agent, 20 parts of a diatomaceous earth, 2 parts of white carbon (amorphous silica of the trade name "CARPLEX #1120" as manufactured by Shionogi & Co., Ltd., Japan) and 38 parts of a clay were uniformly mixed together and then the resulting mixture was pulverized by means of Jet-O-Mizer.

To the resulting fine powder were added about 10 parts of water, and the resultant mixture was kneaded. The kneaded product so obtained was granulated by means of an extrusion-granulator equipped with a screen-type dies having opening holes of 0.7 mm in diameter. After drying the resulting granules at 60°C, the dried granules were screened by means of the screen assembly composed of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 5

15 parts of benthiavalicarb-isopropyl (fungicide), 2 parts of sodium alkylbenzenesulfonate, 5 parts of sodium lignin sulfonate, 2 parts of sodium dialkylsulfosuccinate, 2 parts of potassium stearate as the antifoaming agent, 20 parts of diatomaceous earth, 2 parts of white carbon (amorphous silica of the trade name "CARPLEX #1120" as manufactured by Shionogi & Co., Ltd.) and 52 parts of a clay were uniformly mixed together, and then the resulting mixture was pulverized by means of Jet-O-Mizer.

To the resulting fine powder were added about 10 parts of water, and the resultant mixture was kneaded. The kneaded product so obtained was granulated by means of an extrusion-granulator equipped with a screen-type dies having opening holes of 0.7 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 6

30 parts of mepanipyrim (fungicide), 2 parts of sodium lauryl sulfate, 8 parts of a condensate of formaldehyde with sodium alkylnaphthalenesulfonate, 1 part of magnesium stearate as the antifoaming agent, 30 parts of a diatomaceous earth and 29 parts of a clay were uniformly mixed together, and then the resulting mixture was pulverized by means of Jet-O-Mizer.

To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 7

15 parts of benthiavalicarb-isopropyl (fungicide), 2 parts of sodium lauryl sulfate, 7 parts of sodium lignin sulfonate, 1 part of sodium dialkylsulfosuccinate, 1 part of calcium stearate as the antifoaming agent, 30 parts of a diatomaceous earth and 44 parts of a clay were uniformly mixed together, and then the resulting mixture was pulverized by means of Jet-O-Mizer.

To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 8

8 parts of benthiavalicarb-isopropyl (fungicide), 50 parts of TPN, 2 parts of sodium alkylnaphthalenesulfonate, 8 parts of calcium lignin sulfonate, 2 parts of sodium dialkylsulfosuccinate, 1 part of magnesium stearate as the antifoaming agent, 10 parts of a diatomaceous earth, 5 parts of white carbon (silica of the trade name "CARPLEX #1120" as manufactured by Shionogi & Co., Ltd.) and 17 parts of a clay were uniformly mixed together, and then the resulting mixture was pulverized by means of Jet-O-Mizer.

To the resulting fine powder were added about 10 parts of water, and the resultant mixture was kneaded. The kneaded product so obtained was granulated by means of an extrusion-granulator equipped with a screen-type dies having opening holes of 0.7 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 9

2 parts of benthiavalicarb-isopropyl (fungicide), 50 parts of folpet, 2 parts of sodium alkylnaphthalenesulfonate, 6 parts of a condensate of formaldehyde with sodium alkylnaphthalenesulfonate, 2 parts of sodium dialkylsulfosuccinate, 1 part of calcium stearate as the antifoaming agent, 10 parts of a diatomaceous earth, 1 part of white carbon (silica of the trade name "CARPLEX #1120" as manufactured by Shionogi & Co., Ltd.) and 26 parts of a clay were uniformly mixed together, and then the resulting mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.7 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 10

10 parts of pyriminobac-methyl (herbicide), 3 parts of sodium alkylbenzenesulfonate, 7 parts of a condensate of formaldehyde with sodium alkylnaphthalenesulfonate, 5 parts of polyoxyethylene alkylphenyl ether, 2 parts of calcium palmitate as the antifoaming agent, 20 parts of diatomaceous earth, 5 parts of white carbon (silica of the trade name "CARPLEX #1120" as manufactured by Shionogi & Co., Ltd.), 20 parts of ammonium sulfate and 28 parts of clay were uniformly mixed together, and then the resulting mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.8 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.

Example 11

10 parts of pyriminobac-methyl (herbicide), 8 parts of sodium lignin sulfonate, 2 parts of sodium dialkylsulfosuccinate, 2 parts of calcium laurate as the antifoaming agent, 20 parts of diatomaceous earth, 5 parts of white carbon (silica of the trade name "CARPLEX #1120" as manufactured by Shionogi & Co., Ltd.) and 53 parts of clay were uniformly mixed together, and then the resultant mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the so produced granules at 60°C, the dried granules were screened by means of a sieve of 16 mesh and a sieve of 48 mesh, in the same manner as in Example 1. Granules which were remaining on the top of the 48 mesh sieve were collected. In this way, granules having desired particle sizes within the range of particle diameters of 0.3 to 1.0 mm were obtained as a granule composition comprising the water-dispersible granules according to the present invention.
Next, Comparative Examples as given below will illustrate a preparation example of water-dispersible granules for the comparison purpose, which were prepared in the same manner as in the present invention, except that the mixture of fatty acid metal salts used as the antifoaming agent in accordance with the present invention was omitted or replaced by an antifoaming agent of the silicone-type.

Comparative Example 1

50 parts of mepanipyrim (fungicide), 2 parts of sodium lauryl sulfate, 8 parts of a condensate of formaldehyde with sodium alkylnaphthalenesulfonate, 10 parts of a diatomaceous earth, 5 parts of white carbon (silica of the trade name "CARPLEX #1120" as manufactured by Shionogi & Co., Ltd.) and 25 parts of a clay were uniformly mixed together, and then the resulting mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.6 mm in diameter, so that cylindrical granules were produced. After drying the resulting granules at 60°C, the dried granules were screened by means of a sieve of 16 mesh and a sieve of 48 mesh, in the same manner as in Example 1. Granules which remained on the top of the 48 mesh sieve were collected. In this way, granules having desired particle sizes within the range of particle diameters of 0.3 to 1.0 mm were obtained as a comparative sample of water-dispersible granules for the comparison purpose. The water-dispersible granules for the comparative sample have the same particle sizes and the same formulation as those of the water-dispersible granules of Example 1, except that the mixture of sodium salts of mixed fatty acids (as the antifoaming agent) was omitted and absent therein and the content of the clay was increased.

### Comparative Example 2

15 parts of benthiavalicarb-isopropyl (fungicide), 2 parts of sodium lauryl sulfate, 7 parts of sodium lignin sulfonate, 1 part of sodium dialkylsulfosuccinate, 30 parts of diatomaceous earth and 45 parts of a clay were mixed together, and then the resulting mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the resulting granules at 60°C, the dried granules were screened by means of a sieve of 16 mesh and a sieve of 48 mesh, in the same manner as in Example 1. Granules which remained on the top of the 48 mesh sieve were collected. In this way, granules having desired particle sizes within the range of particle diameter of 0.3 to 1.0 mm were obtained as a comparative sample of the water-dispersible granules for the comparison purpose. The water-dispersible granules for the comparative sample have the same particle sizes and the same formulation as those of the water-dispersible granules of Example 2, except that the mixture of sodium salts of mixed fatty acids (as the antifoaming agent) was omitted and absent therein and the content of the clay was increased.

### Comparative Example 3

10 parts of pyriminobac-methyl (herbicide), 3 parts of sodium alkylbenzenesulfonate, 7 parts of a condensate of formaldehyde with sodium alkylnaphthalenesulfonate, 5 parts of polyoxyethylene alkylphenyl ether, 10 parts of diatomaceous earth, 5 parts of white carbon (silica of the trade name "CARPLEX #1120" as manufactured by Shionogi & Co., Ltd.) and 60 parts of a clay were mixed together, and then the resulting mixture was pulverized by means of Jet-O-Mizer.
To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the so produced granules at 60°C, the dried granules were screened by means of a sieve of 16 mesh and a sieve of 48 mesh, in the same manner as in Example 1. Granules which remained on the top of the 48 mesh sieve were collected. In this way, water-dispersible granules having particle diameters of 0.3 to 1.0 mm were obtained as a comparative sample. These water-dispersible granules for the comparison purpose were a sample to be tested for comparison with the water-dispersible granules of Example 3 above.

### Comparative Example 4

5 parts of benthiavalicarb-isopropyl (fungicide), 50 parts of TPN, 2 parts of sodium alkylnaphthalenesulfonate, 8 parts of sodium lignin sulfonate, 2 parts of sodium dialkylsulfosuccinate, 10 parts of a diatomaceous earth and 23 parts of a clay were mixed together, and then the resulting mixture was pulverized by means of Jet-O-Mizer. To the resulting fine powder were added about 10 parts of water, and the resultant mixture was kneaded. The kneaded product so formed was granulated by means of an extrusion-granulator equipped with a screen-type dies having opening holes of 0.7 mm in diameter. After drying the resulting granules at 60°C, the dried granules were screened by means of a sieve of 16 mesh and a sieve of 48 mesh, in the same manner as in Example 1. Granules which remained on the top of the 48 mesh sieve were collected. In this way, the water-dispersible granules having particle diameters of 0.3 to 1.0 mm were obtained for the comparison purpose.

### Comparative Example 5

15 parts of benthiavalicarb-isopropyl (fungicide), 2 parts of sodium lauryl sulfate, 7 parts of sodium lignin sulfonate, 1 part of sodium dialkylsulfosuccinate, 1 part of a silicone emulsion (as an antifoaming agent), 30 parts of a diatomaceous earth and 44 parts of a clay were mixed together, and then the resulting mixture was pulverized by means of Jet-O-Mizer. To the resulting fine powder were added about 10 parts of water, and the resultant mixture was kneaded. The kneaded product so obtained was granulated by means of an extrusion-granulator equipped with a screen-type dies having opening holes of 0.6 mm in diameter. After drying the resulting granules at 60°C, the dried granules were screened by means of a sieve of 16 mesh and a sieve of 48 mesh, in the same manner as in Example 1. Granules which remained on the top of the 48 mesh, sieve were collected. In this way, the water-dispersible granules having particle diameters of 0.3 to 1.0 mm were obtained. These water-dispersible granules were a comparative sample to be tested for comparison with the water-dispersible granules of Example 7 above.

Comparative Example 6

10 parts of pyriminobac-methyl (herbicide), 3 parts of sodium alkylbenzenesulfonate, 7 parts of a condensate of formaldehyde with sodium alkylnaphthalenesulfonate, 5 parts of polyoxyethylene alkylphenyl ether, 1 part of a silicone emulsion (as the antifoaming agent), 20 parts of a diatomaceous earth, 5 parts of white carbon (silica of the trade name "CARPLEX #1120" as manufactured by Shionogi & Co., Ltd.), 20 parts of ammonium sulfate and 29 parts of a clay were mixed together, and then the resulting mixture was pulverized by means of Jet-O-Mizer. To the resulting fine powder were added about 10 parts of water, and the resultant mixture was kneaded. The kneaded product so obtained was granulated by means of an extrusion-granulator equipped with a screen-type dies having opening holes of 0.8 mm in diameter. After drying the so produced granules at 60°C, the dried granules were screened by means of a sieve of 16 mesh and a sieve of 48 mesh, in the same manner as in Example 1. Granules which remained on the top of the 48 mesh sieve were collected. In this way, the water-dispersible granules having desired particle sizes within the range of particle diameters of 0.3 to 1.0 mm were obtained. These water-dispersible granules were a comparative sample to be tested for comparison with the water-dispersible granules of Example 10 above.

Test Example 1

This Example illustrates some tests for evaluating the disintegrability in water, the dispersibility in water and the suspensibility in water of the granules for each of the products which comprise the water-dispersible granules obtained respectively by the experiments of the Examples as described above.

Each of test samples composed of the water-dispersible granules as obtained respectively in the above-mentioned Examples and Comparative Examples was used to measure their disintegrability in water, their dispersibility in water and their rate (%) of suspensibility in water of the granules, according to a method as described below.

Thus, a 250 ml -capacity cylinder having a cap and containing therein a volume of water having a hardness of 3 degree was placed into a temperature-controlled water bath at 25°C. 250 mg of each test sample of the water-dispersible granules was put into said cylinder as kept in the water bath. Then, the cylinder was repeatedly inverted at a rate of once per 2 seconds. There was counted the count number of the times of the inversion of the cylinder that were required until the water-dispersible granules in the test sample had been completely disintegrated in water and dispersed in water, and said count number was employed as a measure or index to indicate the disintegrability in water and the dispersibility in water of the tested granules.

Subsequently, said cylinder was left to stand still and remain in the temperature-controlled water bath at 25°C. At a time of 15 minutes lapsed after the time of the starting of the cylinder being left to stand still, a specimen each of a volume of 25 ml was taken out from a portion of the resulting aqueous dispersion which was positioned in the middle region of the cylinder. Then, the agrochemically active ingredient present in the specimen as taken was analyzed qualitatively and also was quantitatively determined by a high speed liquid chromatography (HPLC), and the rate (%) of the suspensibility of the active ingredient was calculated by the following equation:

Rate (%) of Suspensibility = $[(B \times 10)/A] \times 100$ wherein "A" and "B" denote the following meanings:

A: denotes a total content or concentration of the active ingredient present in the amount of 250 mg of the test sample of the water-dispersible granules which was initially placed at first in the cylinder.
B: denotes a total quantity or concentration of the active ingredient present in the specimen of the 25 ml-volume as taken out from the aqueous dispersion in the cylinder left to stand still.

The test results so obtained are summarized in Table 1 given below.

Table 1

| Test Granule | Disintegrability in water and Dispersibility in water (Count number of the times of inversion) | Rate (%) of Suspensibility in water (%, concentration) |
|---|---|---|
| Example 1 | 6 | 98.5 |
| Example 2 | 5 | 99.2 |
| Example 3 | 3 | 99.8 |
| Example 4 | 5 | 99.0 |
| Example 5 | 5 | 99.1 |
| Example 6 | 6 | 99.5 |
| Example 7 | 6 | 99.1 |
| Example 8 | 5 | 99.0 |
| Example 9 | 5 | 98.2 |
| Example 10 | 4 | 99.6 |
| Example 11 | 6 | 99.3 |
| Comparative Example 1 | 5 | 97.5 |
| Comparative Example 2 | 3 | 99.8 |
| Comparative Example 3 | 5 | 98.9 |
| Comparative Example 4 | 5 | 98.0 |
| Comparative Example 5 | 18 | 78.7 |
| Comparative Example 6 | 12 | 83.4 |

Test Example 2

This Example illustrates some tests for evaluating the foamability of each of the granular products composed of the granules obtained respectively in the experiments of the above-mentioned Examples as described above.

Each of test samples of the water-dispersible granules as obtained in the above Examples and Comparative Examples was used to measure their foamability according to a method as described below. Thus, 0.5 mg of each test sample of the water-dispersible granules to be tested was put into a 250 ml -capacity cylinder having a cap and containing therein a volume of water having 3 degree of the "hardness". Then, the cylinder was repeatedly inverted at a rate of 15 times per 30 seconds, so that the resulting aqueous dispersion present in the cylinder was stirred. The cylinder was then left to stand still. At a time of one minute after the starting time of the cylinder being left to stand still, a height (in mm) of the phase of foams as produced in the cylinder was measured, and the height of the phase of foams thus measured was used as an index to estimate the foamability.

The test results so obtained are summarized in Table 2 below.

Table 2

| Test Granule | Foamability (the height of foams, mm) |
|---|---|
| Example 1 | 5 |
| Example 2 | 3 |
| Example 3 | 7 |
| Example 4 | 6 |
| Example 5 | 4 |
| Example 6 | 4 |
| Example 7 | 3 |

Table 2 (continued)

| Test Granule | Foamability (the height of foams, mm) |
|---|---|
| Example 8 | 5 |
| Example 9 | 5 |
| Example 10 | 8 |
| Example 11 | 6 |
| Comparative Example 1 | 15 |
| Comparative Example 2 | 24 |
| Comparative Example 3 | 12 |
| Comparative Example 4 | 17 |
| Comparative Example 5 | 7 |
| Comparative Example 6 | 5 |

The granular composition comprising the water-dispersible granules according to the present invention is able to show a lower foamability than that of the conventional prior art granule composition, without being affected by the kind or type or the property of the incorporated agrochemically active ingredient, and this is attributable to the actions of the fatty acid salts (namely, the antifoaming agent) as incorporated therein by this invention. Further, the composition of this invention also has advantages such that it exhibits a combination of an excellent disintegrability in water, an excellent dispersibility in water and an excellent suspensibility in water.

Industrial Applicability

As described above, this invention provides a novel granular composition which comprises the water-dispersible granules containing an agrochemical compound as an active ingredient. This composition is useful and available in the field of agriculture.

**Claims**

1. An agricultural or horticultural granular composition comprising the water-dispersible granules having a low foamability, **characterized in that** the composition comprises:

   (a) at least one of a solid or liquid, agrochemically active ingredient as an active ingredient,
   (b) at least one of a surfactant selected from a sulfonate-type surfactant, a sulfate-type surfactant and a phosphate-type surfactant, and
   (c) at least one of a metal salt of a fatty acid of 6 to 28 carbon atoms, as an antifoaming agent.

2. The composition according to claim 1, wherein the metal salt (c) of a fatty acid of 6 to 28 carbon atoms as the antifoaming agent is a water-soluble ($C_6$ - $C_{28}$) fatty acid alkaline metal salt or comprises a mixture of at least two of the water-soluble ($C_6$ - $C_{28}$) fatty acid alkaline metal salt, or said metal salt (c) is a ($C_6$ - $C_{28}$) fatty acid metal salt (excluding said alkaline metal salt) having a solubility in water of 100 ppm or less at 20°C or comprises a mixture of at least two of said ($C_6$ - $C_{28}$) fatty acid metal salt.

3. The composition according to claim 1 or 2, wherein the water-soluble ($C_6$ - $C_{28}$) fatty acid alkaline metal salt is one of a sodium salt or potassium salt of the fatty acid of 6 to 28 carbon atoms or comprises a mixture of at least two of the ($C_6$ - $C_{28}$) fatty acid sodium or potassium salt.

4. The composition according to claim 1 or 2, wherein the metal salt (c) of the fatty acid of 6 to 28 carbon atoms as the antifoaming agent comprises a mixture of sodium salts of mixed fatty acids consisting of different fatty acids of 6 to 28 carbon atoms, which mixture of the sodium salts namely means a soap.

5. The composition according to claim 2, wherein the ($C_6$ - $C_{28}$) fatty acid metal salt having a solubility in water of 100 ppm or less at 20°C comprises at least one of or a mixture of at least two of lithium salt, barium salt, magnesium salt, calcium salt and zinc salt of the ($C_6$ - $C_{28}$) fatty acid.

6.  The composition according to any one of claims 1 to 5, wherein at least one of or a mixture of at least two of the surfactant (b) comprises a sulfonate-type surfactant.

7.  The composition according to any one of claims 1 to 6, wherein the granules in the composition additionally comprise a solid carrier as an optional component.

8.  The composition according to claims 1 to 7, wherein the agrochemically active ingredient (a) is contained in a proportion of 0.1 to 85% based on the weight of the granules in the composition.

9.  The composition according to claims 1 to 8, wherein the surfactant (b) is contained in a proportion of 0.5 to 30% based on the weight of the granules in the composition.

10. The composition according to claims 1 to 9, wherein the fatty acid metal salt (c) as the antifoaming agent is contained in a proportion of 0.05 to 10% based on the weight of the granules in the composition.

11. The composition according to claims 1 to 10, wherein the composition comprises the solid carrier in a proportion of 5 to 95% based on the weight of the granules in the composition.

## INTERNATIONAL SEARCH REPORT

| | International application No. |
|---|---|
| | PCT/JP03/13427 |

**A. CLASSIFICATION OF SUBJECT MATTER**
Int.Cl⁷ A01N25/14

According to International Patent Classification (IPC) or to both national classification and IPC

**B. FIELDS SEARCHED**

Minimum documentation searched (classification system followed by classification symbols)
Int.Cl⁷ A01N25/14

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 1157612 A1 (NIPPON SODA CO., LTD.), 28 November, 2001 (28.11.01), Full text & WO 01/047355 A1 | 1-11 |
| X<br>A | JP 10-109905 A (Kumiai Chemical Industry Co., Ltd.), 28 April, 1998 (28.04.98), Full text (Family: none) | 1,2,5-11<br>3,4 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>12 December, 2003 (12.12.03) | Date of mailing of the international search report<br>13 January, 2004 (13.01.04) |
| Name and mailing address of the ISA/<br>Japanese Patent Office | Authorized officer |
| Facsimile No. | Telephone No. |

Form PCT/ISA/210 (second sheet) (July 1998)